# EUROPEAN PATENT APPLICATION

(11) **EP 1 739 142 A1**
(43) Date of publication of application: **03.01.2007**
(21) Application number: 05734510.0
(22) Date of filing: 21.04.2005
(51) Int. Cl.: C09D 11/10, C08G 63/00

(54) **METHOD FOR PRODUCING MODIFIED ROSIN ESTER RESIN COMPOSITION FOR LITHOGRAPHIC INK VARNISH AND METHOD FOR PRODUCING LITHOGRAPHIC INK VARNISH**

(30) Priority: 22.04.2004 JP 2004126685
(71) Applicant: Dainippon Ink and Chemicals, Incorporated, Itabashi-ku Tokyo 174-8520 (JP)
(72) Inventor: SHIMOYAMA, Shoichi, 2994127 Chiba (JP); MOTOMURA, Masatoshi, 2900075 Chiba (JP)
(74) Representative: Albrecht, Thomas
(86) International application number: PCT/JP2005/007600
(87) International publication number: WO 2005/103173

(57) **Abstract**

This process for producing a modified rosin ester resin composition for use in a lithographic ink reacts rosin (A), an acid modified rosin (B) which is obtained by denaturating rosin (A) with an α,β-unsaturated dicarboxylic acid and/or anhydride thereof (d), an oil modified rosin (C) which is obtained by denaturating rosin (A) with a vegetable oil (c) having an iodine value of 140 or more, with a polyol (D) of trihydric or more.

## Description

### TECHNICAL FIELD

The present invention relates to a process for producing a modified rosin ester resin composition for use in lithographic ink varnish and a process for producing lithographic ink varnish which uses the modified rosin ester resin composition for use in lithographic ink varnish produced thereby.

### BACKGROUND ART

Although a rosin modified phenolic resin is used mainly as a raw material of a resin and a varnish for use in an offset lithographic ink, in order to improve living environment and working environment, new resins directed to the removal of alkyl phenol components and formaldehyde components contained in resins have recently developed.

As a process for producing such a resin for use in an offset lithographic ink containing no alkyl phenol components or formaldehyde components, for example, a process for producing a resin which includes reacting the Diels-Alder reactant (mixture of acid modified resin acid and non-reacted resin acid) of resin acid and α, β- ethylenic unsaturation carboxylic acid or anhydride thereof with a dihydric alcohol having 6 to 60 carbon atoms or a dihydric alcohol having 6 to 60 carbon atoms and a polyol of not less than trihydric (for example, see Patent document 1.).

However, since dihydric alcohol having 6 to 60 carbon atoms used here have a low boiling point, i.e., at a reaction temperature ranging from 220 to 270 °C of normal resin acids, it is hard to keep dihydric acid within the reaction system, and since it is likely to vaporize from the reaction system it is also hard to react (i.e., it takes a significantly long time for reaction, and further it is likely to be highly viscous.) Therefore sufficient viscoelasticity is hard to obtain in lithographic ink for use in varnish based on these resins.
Moreover, in the case of forming a varnish from a resin which is synthesized by using a polyol of trihydric or more together with dihydroxyl alcohol having 6 to 60 carbon atoms in the reaction system instead of reducing the dihydroxyl alcohol having 6 to 60 carbon atoms, the solubility into a solvent for use in printing ink of not more than 1 % by weight of an aromatic compound component which is preferable as environmental adaptability will also be insufficient, and as a result ink flowability and spreadability will be insufficient, thereby deteriorating the gloss of printed matter. Moreover, if complex alkyd resin was added at a varnish preparation stage using oil such as vegetable oil, linseed oil, tung oil, or soybean oil in order to improve these, then misting of polluting presswork environment will occur, and the above problems would not be solved sufficiently.

### [Patent document 1]

Japanese Unexamined Patent Application, First Publication No. 2000-169563 bulletin

### DISCLOSURE OF THE INVENTION

It is an object of the present invention to provide a resin composition for use in an eco-friendly lithographic ink varnish being produced as a composition which contains a resin having a high molecular weight and high viscosity without using phenols during the synthesis process thereof, such as alkyl phenols or formaldehydes which are harmful to the environment, yet still having excellent solubility in non-aromatic type solvents despite having sufficient molecular weight and viscosity as one for use in a lithographic ink, and being a modified rosin ester resin composition suitable for a lithographic ink, and a lithographic ink varnish using this resin composition.

The inventors of the present invention studied thoroughly in order to solve the above problem, and as a result they discovered the following items (1) to (4) and to complete the present invention.

(1) When rosin (A) is reacted with α,β-unsaturated dicarboxylic acid and/or anhydride thereof (b) to form a reaction mixture which contains non-reacted rosin (A) and an acid denatuated rosin (B), then the resultant mixture is reacted with vegetable oil (c) having an iodine value of 140 or more, and thereafter the mixture is reacted with a polyol (D) of trihydric or more, then the mixture will easily have a comparatively high molecular weight and high viscosity for a short time even in the absence of phenols and formaldehydes. Further, higher hydrocarbon groups derived from vegetable oil (c) will be incorporated thereinto at the synthesizing step, and hence it is possible to produce a modified rosin ester resin which has excellent solubility to non-aromatic type solvent and a modified rosin ester resin which contains non-reacted vegetable oil (c) and/or non-reacted polyol (D).

(2) The process for producing the modified rosin ester resin composition is not limited to the production process (1) in the above, and any process is usable as far as it reacts rosin (A), acid modified rosin (B) which is obtained by denaturating rosin (A) with α,β-unsaturated dicarboxylic acid and/or anhydride thereof (b), oil modified rosin (C) which is obtained by denaturating rosin (A) with vegetable oil (c) having an iodine value of 140 or more, and polyol (D) of trihydric or more.

(3) As an industrial production process for the modified rosin ester resin composition, a process which includes reacting a reaction mixture which contains rosin (A) and an acid modified rosin (B) obtained by reacting rosin (A) with α,β-unsaturated dicarboxylic acid and/or anhydride thereof (b), vegetable oil (c) having an iodine value of 140 or more, and polyol (D) of trihydric or more at a temperature of not less than 160°C and not more than 230°C, and then further at a temperature of not less than 230°C and not more than 270°C is particularly preferable.

(4) Since the above modified rosin ester resin composition has an excellent solubility to non-aromatic type solvents, it is suitable for use in lithographic ink varnish, and it is easy to form a lithographic ink varnish therefrom by dissolving it into a hydrocarbon type solvent (E). The ink using the resultant varnish has little free vegetable oil and hence deteriorating phenomena such as printability failure by misting or hyperemulsification will rarely occur.

That is, the present invention provides a process for producing a modified rosin ester resin composition for use in lithographic ink varnish including reacting rosin (A), an acid modified rosin (B) which is obtained by denaturating rosin (A) with α,β-unsaturated dicarboxylic acid and/or anhydride thereof (b), an oil modified rosin (C) which is obtained by denaturating rosin (A) with a vegetable oil (c) having an iodine value of 140 or more, and a polyol (D) of trihydric or more.

Moreover, the present invention provides a process for producing a lithographic ink varnish which includes dissolving the modified rosin ester resin composition for use in a lithographic ink varnish into a hydrocarbon type solvent (E), and a process for producing a lithographic ink varnish which includes dissolving the modified rosin ester resin composition for use in a lithographic ink varnish into a hydrocarbon type solvent (E), and thereafter reacting with a gelling agent (F) further.

Since the modified rosin ester resin composition for use in lithographic ink varnish and the lithographic ink varnish obtained by the production process of the present invention can be produced by using no alkyl phenols and no formaldehydes in the step of synthesizing resin, they have characteristics which excel in the production environments, and presswork environments, and protect the environment by not producing environmental pollutants. Moreover, the modified rosin ester resin composition for use in lithographic ink varnish obtained by the production process of the present invention contains a modified rosin ester resin with high molecular weight and high viscosity by incorporating a vegetable oil (c) having an iodine value of 140 or more which has not been used in the above Patent document 1, and it has sufficient viscosity and weight average molecular weight for use in a lithographic ink, and since the lithographic ink using this can suppress bad printability caused by misting and hyperemulsification and has high solubility to non-aromatic type solvents, it is possible to prepare a lithographic ink which excels in color dispersibility and gloss. This characteristic is by no means inferior to the ink characteristics of the rosin modified phenolic resin which has been conventionally used as a lithographic ink, and hence substitution is possible. And it is effective for environmental improvement because it releases no environmental pollutants.

### BEST MODE FOR CARRYING OUT THE INVENTION

As rosin (A) to be used in the present invention, rosin having the conjugated double bond which can cause A Diels-Alder rection such as gum rosin, wood rosin, tall oil rosin, and a mixture thereof, etc. are exemplary. In general, rosin refers to a remaining resin component after evaporating the resin liquid of a pinaceous plant. Its composition is resin acid mainly consisting of abietic acid and various isomers of a neutral component, and they are tetramer of terpene having conjugated double bonds. It should be noted that as rosin (A) to be used in the present invention, if necessary, rosins having no conjugated double bonds, such as disproportionated rosin, dimerized rosin, hydrogenated rosin, etc. can be used within a range such that the content becomes not more than 20 % by weight together with rosins having conjugated double bonds, however, preferably the amount of rosins having no conjugated double bonds is small in order to make it easy to increase molecular weight and viscosity, more preferably rosins having no conjugated double bonds are not used. If rosin in which the content of the rosin having no conjugated double bonds is over 20 % by weight is used, then the increase of molecular weight and viscosity becomes difficult, and hence it is not preferable.

As the acid modified rosin (B) to be used in the present invention, those obtained by denaturating the above rosin (A) with α,β-unsaturated dicarboxylic acid and/or anhydride thereof (b) may be used, for example, an acid modified rosin which contains three carboxylic groups within one molecule, which is obtained by performing a Diels-Alder rection between the conjugated double bonds of rosin (A) and the unsaturated groups of α,β-unsaturated dicarboxylic acid or anhydride thereof (b) is exemplary. The reaction temperature in this case is generally not less than 160°C and not more than 230°C, preferably ranging from 180 to 220°C, and the reaction time is generally for 15 minutes to 4 hours, preferably for 20 minutes to 2 hours.

As the above α,β-unsaturated dicarboxylic acid and/or anhydride thereof (b), various kinds of α,β-unsaturated dicarboxylic acid and/or anhydride thereof which is capable of performing Deals-Alder reaction can be used. For example, chain dicarboxylic acids having 3 to 5 carbon atoms and/or anhydride thereof, such as maleic acid (cis-butene diacid), maleic anhydride, fumaric acid (trans-butene diacid), itaconic acid (methylene succinic acid), itaconic acid anhydride, crotonic acid (trans-2-butene acid), etc., are exemplary, in particular, those which contain 80 % by weight or more of fumaric acid is preferable, and only fumaric acid is more preferable, because of the ease of increasing molecular weight and viscosity when producing the modified rosin ester resin composition and difficulties in gelling. The above α,β-unsaturated dicarboxylic acid and/or anhydride thereof are bifunctional acids, which can make rosin framework polyfunctional by a Deals-Alder reaction with rosin to form a cross-linking structure, thereby enabling increasing of molecular weight and viscosity of the modified rosin ester resin. The amount of the α,β-unsaturated dicarboxylic acid and/or anhydride thereof (b) to be used when obtaining the acid modified rosin (A) is preferably in a range from 5 to 30 parts by weight to 100 parts by weight of rosin, more preferably ranging from 5 to 20 parts by weight, because it is easy to increase molecular weight and viscosity and it is resistant to gelling when producing the modified rosin ester resin composition.

It should be noted that as the rosin (A) and the acid modified rosin (B) to be used in the present invention, it is preferable to use a mixture of non-reacted rosin (A) and the acid modified rosin (B) obtained by producing the acid modified rosin (B) under the conditions such that the rosin (A) will remain in a non-reacted state, that is the conditions such that the conjugated double bonds in the rosin (A) becomes excessive to the unsaturated groups in the α,β-unsaturated dicarboxylic acid and/or anhydride thereof (b). Moreover, this mixture is preferably a mixture having an acid value ranging from 200 to 300 KOHmg/g, more preferably a mixture having an acid value ranging from 220 to 260 KOHmg/g, and still more preferably a reaction mixture having an acid value ranging from 220 to 260 KOHmg/g obtained by reacting 100 parts by weight of rosin (A) with 5 to 20 parts by weight of α,β-unsaturated dicarboxylic acid having 3 to 5 carbon atoms and/or anhydride thereof (b), because it is easy to increase molecular weight and viscosity and it is resistant to gelling when producing the modified rosin ester resin composition. The most preferable mixture is a reaction mixture having an acid value ranging from 220 to 260 KOHmg/g obtained by reacting 100 parts by weight of rosin (A) with 5 to 20 parts by weight of α,β-unsaturated dicarboxylic acid having fumaric acid content of not less than 80 % by weight and/or anhydride thereof.

The oil modified rosin (C) to be used in the present invention may be those obtained by denaturating rosin (A) with vegetable oil (c) having an iodine value of not less than 140, for example, a vegetable oil modified rosin obtained by performing a Deals-Alder reaction between the conjugated double bonds in the rosin (A) and the conjugated double bonds in the vegetable oil (c) having an iodine value of not less than 140 is exemplary. In particular, the oil modified rosin obtained by denaturating rosin (A) with vegetable oil having an iodine value ranging from 140 to 200 is preferable. It should be noted that in the production of the oil modified rosin (C) it is not necessary to react all of the vegetable oil (c) used for denaturating the rosin (A), and the remained vegetable oil (c) may be in a non-reacted state together with the oil modified rosin (C). Moreover, the reaction temperature in this case is generally not less than 160°C and not more than 230°C, preferably ranging from 180 to 220°C, and the reaction time within these temperature ranges generally from 1 to 4 hours, preferably from 1.5 to 3 hours. It should be noted that the unit of an iodine value in the present invention is I₂g/100g.

The vegetable oil (c) to be used in producing the above oil modified rosin (C) may be those having an iodine value of not less than 140, for example, tung oil which is a drying oil with an iodine value of not less than 140, tung oil fatty acid, linseed oil, linseed oil fatty acid, etc., are exemplary. Moreover, even if it is a modified substance such as soybean oil which is semidrying oil, soybean oil fatty acid etc., it may be used together with a drying oil having an iodine value of not less than 140, as far as the amount is one such that the an iodine value after mixing becomes not less than 140. If vegetable oil having an iodine value of less than 140 is used, then molecular weight of the modified rosin ester resin composition will not increase and the varnish using this resin composition cannot acquire sufficient viscosity, and hence it is not preferable. As the vegetable oil (c) having an iodine value of not less than 140, in particular a vegetable oil having an iodine value ranging from 140 to 200 is preferable.

As the polyol (D) to be used in the present invention, those of trihydric or more may be used, and it is not limited in particular, but polyol of trihydric or tetrahydric is preferable, and the percentage to be used is in general not less than 70 % by weight, preferably not less than 80 % by weight, particularly preferably 100 % by weight to the total amount of 100 % by weight of the polyol (D). As the polyol of trihydric or tetrahydric, for example, glycerin, trimethylol propane, ditrimethylol propane, pentaerythritol [C(CH₂OH)₄], dipentaerythritol, D-sorbitol (D-glucitol), etc., are exemplary.
It should be noted that dihydric polyol may be used together with the polyol (D) of trihydric or more, in the present invention, however, if a large amount of dihydric polyol is used, then it becomes impossible to obtain a resin having high viscosity, and hence it is necessary to limit the amount of dihydric polyol to be used so that it is not more than 30 parts by weight to 100 parts by weight of the polyol (D) of trihydric or more.

The process for producing a modified rosin ester resin composition for use in lithographic ink varnish in accordance with the present invention is a process to react the rosin (A), the acid modified rosin (B), the oil modified rosin (C) and the polyol (D) of trihydric or more, for example, a process which includes reacting rosin (A), the α,β-unsaturated dicarboxylic acid and/or anhydride thereof (b), and the vegetable oil (c) having an iodine value of not less than 140 to form a reaction mixture which contains the rosin (A), the acid modified rosin (B), and the oil modified rosin (C), and which may contain vegetable oil (c) of a non-reacted state, and thereafter reacting the resultant reaction mixture with the polyol (D) of trihydric or more, preferably in the presence of an esterification reaction catalyst, is exemplary. It should be noted that the vegetable oil (c) in a non-reacted state and/or the polyol (D) in a non-reacted state may remain in the reaction product obtained by the production process of the present invention. Moreover, as the amount to be used of each components in the production process of the present invention, preferably the amount of rosin (A) ranges from 0.5 to 6 parts by weight, the amount of the acid modified rosin (B) ranges from 21 to 75 parts by weight, the amount of the oil modified rosin (C) ranges from 21 to 75 parts by weight, and the amount of the polyol (D) of tirhydric or more ranges from 4 to 20 parts by weight, respectively, to the 100 parts by weight of the total of the rosin (A), the acid modified rosin (B), the oil modified rosin (C), in particular, more preferably the amount of rosin (A) ranges from 1 to 4 parts by weight, the amount of the acid modified rosin (B) ranges from 31 to 65 parts by weight, the amount of the oil modified rosin (C) ranges from 31 to 65 parts by weight, and the amount of the polyol (D) of tirhydric or more ranges from 6 to 15 parts by weight, respectively.

As the production process of the present invention, in particular, a process which includes reacting rosin (A) with the α,β-unsaturated dicarboxylic acid and/or anhydride thereof (b) to form a reaction mixture which contains the rosin (A) and the acid modified rosin (B), and then reacting the resultant reaction mixture with the vegetable oil (c) having an iodine value of not less than 140, and thereafter reacting the mixture with the polyol (D) of trihydric or more is preferable, because it is possible to prevent the reaction of the α,β-unsaturated dicarboxylic acid and/or anhydride thereof (b) with the vegetable oil (c), it is easy to increase the molecular weight and the viscosity of the modified rosin ester resin, and it is resistant to gelling the resin. It should be noted that the reaction mixture system before reacting it with the polyol (D) of trihydric or more, is preferably a reaction mixture which contains the rosin (A), the acid modified rosin (B), and the oil modified rosin (C), and which may contain the vegetable oil (c) in a non-reacted state.

In the production process, the reaction condition when obtaining the reaction mixture which contains the rosin (A) and the acid modified rosin (B), and the reaction condition when reacting the resultant reaction mixture with the vegetable oil (c) may be one such that the rosin (A) remains in a non-reacted state, preferably it is a condition such that the conjugated double bonds in the rosin (A) becomes excessive to both of the unsaturated groups of the α,β-unsaturated dicarboxylic acid and/or anhydride thereof (b) and the unsaturated groups of the vegetable oil (c).

As an industrially preferable production process in accordance with the present invention, a process which includes mixing a reaction mixture which contains the rosin (A) and the acid modified rosin (B) [referred to as reaction mixture (1) below] obtained by reacting the rosin (A) with the α,β-unsaturated dicarboxylic acid and/or anhydride thereof (b), with the vegetable oil (c) having an iodine value of not less than 140, and the polyol (D) of trihydric or more, and react the mixture at a temperature of not less than 160°C and not more than 230°C, preferably ranging from 180 to 220°C, and thereafter further reacting the mixture at a temperature ranging from 230 to 270°C, preferably ranging from 240 to 260°C, is exemplary. It should be noted that the reaction mixture (1) is preferably a reaction mixture which contains the rosin (A), the acid modified rosin (B), the oil modified rosin (C), and the polyol (D) of trihydric or more, and which may contain the vegetable oil (c) in a non-reacted state.

In the industrially preferable production process above, to 100 parts by weight of the reaction mixture (1), the vegetable oil (c) having an iodine value of not less than 140 is generally used in an amount ranging from 4 to 80 parts by weight, preferably ranging from 5 to 50 parts by weight, and the polyol (D) of trihydric or more is generally used in an amount ranging from 5 to 30 parts by weight, preferably ranging from 10 to 20 parts by weight. Moreover, as described above, because of the ease of increasing of molecular weight and viscosity of the modified rosin ester, and resistance to gelling the modified rosin ester, the reaction mixture (1) is preferably a reaction mixture having acid value ranging from 220 to 260 KOHmg/g obtained by reacting 100 parts by weight of rosin (A) with 5 to 20 parts by weight of α,β-unsaturated dicarboxylic acid having 3 to 5 carbon atoms and/or anhydride thereof (b), and is the most preferably a reaction mixture having acid value ranging from 220 to 260 KOHmg/g obtained by reacting 100 parts by weight of rosin (A) with 5 to 20 parts by weight of α,β-unsaturated dicarboxylic acid having the fumaric acid content of not less than 80 % by weight and/or anhydride thereof.

Moreover, in the above industrially preferable production process, after mixing the reaction mixture (1) and the vegetable oil (c) having an iodine value of not less than 140 and the polyol (D) of trihydric or more, at first the resultant mixture is reacted at a comparatively low temperature of not less than 160°C and not more than 230°C, preferably ranging from 180 to 220°C, and hence the rosin (A) and the vegetable oil (c) in the reaction mixture obtained by this reaction are mainly reacted with each other to form the oil modified rosin (C), whereas the reaction among the rosin (A), the acid modified rosin (B), and the polyol (D) of trihydric or more will almost not progress. The reaction mixture obtained at this time [referred to as "reaction mixture (2)", below] is preferably a reaction mixture which contains the rosin (A) the acid modified rosin (B), the oil modified rosin (C), and the polyol (D) of trihydric or more, and which may contain the vegetable oil (c) in a non-reacted state. Subsequently in this production process, the above reaction mixture (2) is further reacted at a temperature ranging from 230 to 270°C, preferably ranging from 240 to 260°C, and hence the increase of molecular weight and viscosity will progress by the reaction among the rosin (A), the acid modified rosin (B), the oil modified rosin (C), and the polyol (D) of trihydric or more.

It should be noted that in the above industrially preferable production process, the reaction time among the reaction mixture (1), the vegetable oil (c) and the polyol (D) at a temperature of not less than 160°C and not more than 230°C, preferably ranging from 180 to 220°C is usually 1 to 4 hours, preferably 1.5 to 3 hours. Subsequently the reaction time of the resultant reaction mixture (2) at a temperature ranging from 230 to 270°C, preferably ranging from 240 to 260°C, is the time until the acid value becomes 10 to 30 KOHmg/g, preferably 16 to 30 KOHmg/g, and generally 5 to 24 hours, preferably 8 to 15 hours. Moreover, in this production process, the reaction temperature is not necessarily constant in each temperature range, and the reaction may be performed while varying the reaction temperature within each temperature range, for example, it is preferable that the vegetable oil (c) of room temperature and the polyol (D) of room temperature are mixed into the reaction mixture of not less than 160°C and not more than 230°C obtained by reacting rosin (A) with the α,β-unsaturated dicarboxylic acid and/or anhydride thereof (b) at a temperature of not less than 160°C and not more than 230°C to obtain a mixture of a temperature ranging from 110 to 170°C, and then the resultant mixture is heated under the condition of a heating rate ranging from 10 to 50°C/hr, preferably ranging from 20 to 40°C/hr, thereby reacting the reaction mixture (1), the vegetable oil (c), and the polyol (D) at a temperature of not less than 160°C and not more than 230°C to obtain the reaction mixture (2), and thereafter the reaction mixture (2) is heated up to be within the temperature range of 230 to 270°C, thereby reacting the reaction mixture further.

In the above production process of the present invention, if necessary, it is possible to use phenols, formaldehydes, and a phenol type resin obtained by reacting these, together with the four components consisting of the rosin (A), the acid modified rosin (B), the oil modified rosin (C), and the polyol (D) of trihydric or more, but it is not always necessary. For this reason, the production process of the present invention is preferably performed in the absence of phenols and formaldehydes in order to improve its environmental friendness.

Since the reaction among the rosin (A), the acid modified rosin (B), the oil modified rosin (C), and the polyol (D) of trihydric or more in the production process of the present invention is an estrification reaction between the carboxylic groups of the rosin (A), the acid modified rosin (B) and the oil modified rosin (C) and the hydroxyl groups of the polyol (D) of trihydric or more, and an ester exchange reaction between the carboxylic groups of the rosin (A), the acid modified rosin (B), and the ester groups of the oil modified rosin (C), etc., the resultant modified rosin ester resin easily becomes a highly viscous polymer, and can contribute to the preparation of a lithographic ink having improved printability in which misting and hyperemulsification, etc. hardly occurs. In addition, the component derived from the vegetable oil (c) in the oil modified rosin (B) is introduced thereinto, thereby improving the solubility into non-aromatic type solvents.

In the production process of the present invention, the reaction is generally performed until the weight average molecular weight of the resultant modified rosin ester resin composition for use in lithographic ink varnish (i.e., a resin composition which contains a modified rosin ester resin and non-reacted vegetable oil (c) and/or non-reacted polyol (D).) becomes 20,000 to 350,000, in particular, because it provides a lithographic ink having high viscosity, excellent solubility to non-aromatic type solvents, and hardly generates bad printability such as hyperemulsification, etc., it is preferable to perform the reaction until the weight average molecular weight becomes 40,000 to 300,000, and it is more preferable to perform the reaction until the weight average molecular weight becomes 70,000 to 270,000. It should be noted that acid value of the modified rosin ester resin composition which can be obtained at this time preferably ranges from 10 to 30 KOHmg/g, more preferably ranges from 16 to 30 KOHmg/g. Moreover, the viscosity (Gardner Holtz viscosity at 25 °C in a toluene solution having a concentration of 60 % by weight) of the modified rosin ester resin composition preferably ranges from M to Z4, more preferably ranges from P to Z2. Although preferably the vegetable oil (c) in a non-reacted state and/or the polyol (D) in a non-reacted state contained in the modified rosin ester resin composition are contained, they are generally remained.

As a catalyst for the above esterification reaction, for example, divalent metal compounds, such as calcium hydroxide, magnesium oxide, zinc oxide, calcium oxide, etc.; acid catalysts, such as p-toluenesulfonic acid, methane sulfonic acid, sulfuric acid, etc., are preferable, and in particular, divalent metal compounds are more preferable. The amount of divalent metal compounds to be used preferably ranges from 0.05 to 2 parts by weight of the divalent metal compounds to 100 parts by weight of the total of the four components consisting of the rosin (A), the acid modified rosin (B), the oil modified rosin (C), and the polyol (D).

The lithographic ink varnish of the present invention is obtained by dissolving the modified rosin ester resin composition for use in lithographic ink varnish obtained by the production process of the present invention in a hydrocarbon type solvent (E). At this time, if necessary, the vegetable oil (c'), alkyd resins, etc., can be added. Moreover, as the lithographic ink varnish of the present invention, it is preferable that the modified rosin ester resin composition for use in lithographic ink varnish is dissolved in a hydrocarbon type solvent (E), and then a gelling agent (F) is added thereinto to be reacted, thereby increasing the molecular weight and the viscosity further. As the lithographic ink varnish having a molecular weight and viscosity increased by a gelling agent (F), because it excels in gloss and it is hardly causes misting or hyperemulsification, one having the data: Eta* ranging from 500 to 20,000 dPa·s, and Tan δ ranging from 0.6 to 10 when the frequency is 1rad/sec; Eta* ranging from 50 to 8,000 dPa·s, and Tan δ ranging from 0.6 to 10 when the frequency is 100 rad/sec, which is obtained by viscoelasticity measurement (temperature = 25 °C, test method = Frequency Sweep, measurement style = parallel plate, Strain = 20%) using a rheometer (Stress Rheometer (Trade Mark) produced by Reometrics company) is preferable, in particular, one having the data: Eta* ranging from 1,000 to 10,000 dPa·s, and Tan δ ranging from 1 to 7 when the frequency is 1 rad/sec; Eta* ranging from 100 to 4,000 dPa · s, and Tan δ ranging from 1 to 5 when the frequency is 100rad/sec, is more preferable.

Although the hydrocarbon type solvent (E) used here is not limited in particular, petroleum type hydrocarbon type solvents having boiling points ranging from 200 to 360°C is preferable. This is added to adjust the viscosity and improve drying characteristics of lithographic ink. Recently, naphthene type solvents or paraffin type solvents with no aromatic components or not more than 1 % by weight of the same are preferably used in order to improve working environment. As commercially available products, 0 solvent L, 0 solvent M, 0 solvent H, AF4 solvent, AF5 solvent, AF6 solvent, AF7 solvent, etc., [produced by SHIN-NIHON SEKIYU Co., Ltd.] are exemplary.

Moreover, as the above vegetable oil (c'), the vegetable oil (c) having an iodine value of not less than 140, and vegetable oils having an iodine value of less than 140, such as soybean oil which is a semidrying oil, modified products such as soybean oil fatty acid, etc., are exemplary, in particular, the vegetable oil (c) having an iodine value of not less than 140 is preferable. However, soybean oil is preferably used as a lithographic ink for recent environmental matching. The vegetable oil (c') is preferably used in an amount such that the total of the vegetable oil (c) component used in the production and the above vegetable oil (c') component becomes 4 to 100 parts by weight, more preferably 5 to 80 parts by weight, to 100 parts by weight of the resin content which is obtained by reducing the vegetable oil (c) component used in the production from the modified rosin ester resin for use in the lithographic ink varnish of the present invention, because it provides a lithographic ink which excels in gloss, and which hardly generates misting or hyperemulsification.

Moreover, as the gelling agent (F), for example, aluminum octoate, aluminum stearate, zirconium octoate, aluminum triisopropoxide, and aluminum dipropoxide monoacetylacetonate, etc., are exemplary. The amount to be used thereof is preferably in a range such that the gelling agent (F) becomes 0.1 to 5 parts by weight, more preferably 0.2 to 3 parts by weight, to 100 parts by weight of the total of the solution obtained by dissolving the modified rosin ester resin for use in lithographic ink varnish into the hydrocarbon type solvent (E) and the gelling agent (F).

As the preparation method of the lithographic ink varnish of the present invention, for example, a method which includes charging a four mouth flask equipped with a thermometer with 40 to 80 parts by weight of the modified rosin ester resin composition for use in the lithographic ink varnish of the present invention, 0 to 30 parts by weight of the above vegetable oil (c'), and 10 to 70 parts by weight of the hydrocarbon type solvent (E), dissolving the mixture at a temperature ranging from 180 to 220°C, while releasing an inert gas, and then adjusting the viscosity so as to be ranging from 500 to 8000 dPa·s/25°C by a B type viscometer, corresponding to various kinds of use of lithographic ink such as offset rotogravure ink, sheet-fed ink, dry offset ink, and newspaper ink, etc. is exemplary.

As the preparing method of the lithographic ink using the lithographic ink varnish of the present invention, for example, a method which includes kneading the lithographic ink varnish, pigment, and if necessary additives such as drying accelerator, etc., using a kneading apparatus such as three-rolls or a jet mill to disperse the pigment in the lithographic ink is preferable.

As the above pigment, various pigments can be used, for example, benzidine yellow, lake red C, carmine 6B, phthalocyanine blue, and carbon black, etc., are exemplary. In addition, body colors such as an inorganic pigment or a fluidity regulator can be used.

### EXAMPLE

A more detailed explanation will be given below about the modified rosin ester resin composition for use in lithographic ink varnish and the lithographic ink varnish of the present invention, and further the lithographic ink using these, while showing Examples and Comparative examples.

### Example 1

Into a reaction vessel, 1,000g of gum rosin (acid value 165 KOHmg/g) and 106 g of fumaric acid were placed, and the resultant mixture was heated and stirred at 220°C for 1 hour while releasing nitrogen into the vessel to obtain a reaction mixture which contained the acid modified gum rosin and non-reacted gum rosin, having an acid value of 242 KOHmg/g, and thereafter adding 317g of linseed oil and 162g of pentaerythritol were added thereinto and mixed, and further 1.5g of magnesium oxide as a catalyst was added and mixed. And as a result, the temperature of the reactor became 161°C. Subsequently, this reaction vessel was heated and the reaction was performed, while heating it up to 270°C at the heating rate of 30°C/hr, and thereafter the reaction was continued at 270°C until the acid value became not more than 20 KOHmg/g to obtain the modified rosin ester resin composition (R-1) for use in the lithographic ink varnish of the present invention which contained the modified rosin ester resin, non-reacted linseed oil, and pentaerythritol. As to the obtained modified rosin ester resin composition (R-1) for use in lithographic ink varnish, acid value, weight average molecular weight, viscosity and solvent solubility (AF solvent 7 solubility) were measured. The results are shown in Table 1.

It should be noted that the measurement of the acid value, weight average molecular weight, viscosity and solvent solubility (AF solvent 7 solubility) were performed as follows.
* Acid value: Measured in accordance with JISK5601-2-1 (1999).
* Weight average molecular weight: Obtained from a calibration curve of polystyrene conversion using a gel-permeation chromatography (HLC8020) produced by Tosoh Co. Ltd.
* Viscosity: The solution was packed into Gardner-Holtz viscosity tube to measure the viscosity at 25°C after the modified rosin ester resin composition (R-1) for use in lithographic ink varnish was dissolved in toluene to form 60 % by weight toluene solution.
* Solvent solubility (AF solvent 7 solubility): The modified rosin ester resin composition (R-1) for use in lithographic ink varnish was dissolved in AF solvent 7 (Petroleum type solvent, produced by Shin-Nihon Sekiyo Co., Ltd.) by heating, and solvent solubility was shown by the capacity (ml/g) of AF solvent 7 per I g of the modified rosin ester resin composition (R-1), which was needed until the solution became cloudy, when it is cooled to 25 °C.

### Example 2

Into a reaction vessel, 1,000g of gum rosin (acid value 165 KOHmg/g) and 106 g of fumaric acid were placed, and the resultant mixture was heated and stirred at 200°C for 30 minutes while releasing nitrogen into the vessel to obtain a reaction mixture which contained the acid modified gum rosin and non-reacted gum rosin, having an acid value of 240 KOHmg/g, and thereafter 240g of linseed oil and 162g of pentaerythritol were added thereinto and mixed, and further 1.5g of magnesium oxide as a catalyst was added and mixed. And as a result, the temperature of the reactor became 155°C. Subsequently, this reaction vessel was heated and the reaction was performed, while heating to 260°C at the heating rate of 30°C/hr, and thereafter the reaction continued at 260°C until the acid value became not more than 25 KOHmg/g to obtain the modified rosin ester resin composition (R-2) for use in lithographic ink varnish of the present invention which contains the modified rosin ester resin, non-reacted linseed oil, and pentaerythritol. As for the obtained modified rosin ester resin composition (R-2) for use in lithographic ink varnish, the acid value, weight average molecular weight, viscosity and solvent solubility (AF solvent 7 solubility) were measured. The results are shown in Table 1.

### Example 3

Into a reaction vessel, 1,000g of gum rosin (acid value 165 KOHmg/g) and 106 g of fumaric acid were placed, and the resultant mixture was heated and stirred at 200°C for 30 minutes while releasing nitrogen into the vessel to obtain a reaction mixture which contained the acid modified gum rosin and non-reacted gum rosin, having acid value of 240 KOHmg/g, and thereafter 160g of linseed oil and 162g of pentaerythritol were added thereinto and mixed, and further 1.5g of magnesium oxide as a catalyst was added and mixed. And as a result, the temperature of the reactor became 160°C. Subsequently, this reaction vessel was heated and the reaction was performed, while heating to 260°C at the heating rate of 30°C/hr, and thereafter the reaction was continued at 260°C until the acid value became not more than 30 KOHmg/g to obtain the modified rosin ester resin composition (R-3) for use in the lithographic ink varnish of the present invention which contained the modified rosin ester resin, non-reacted linseed oil, and pentaerythritol. As for the obtained modified rosin ester resin composition (R-3) for use in lithographic ink varnish, the acid value, weight average molecular weight, viscosity and solvent solubility (AF solvent 7 solubility) were measured. Results are shown in Table 1.

### Example 4

Into a reaction vessel, 1,000g of gum rosin (acid value 165 KOHmg/g) and 106 g of fumaric acid were placed, and the resultant mixture was heated and stirred at 200°C for 30 minutes while releasing nitrogen into the vessel to obtain a reaction mixture which contained the acid modified gum rosin and non-reacted gum rosin, having acid value of 240 KOHmg/g, and thereafter 222g of linseed oil, 95g of soybean oil, and 162g of pentaerythritol were added thereinto and mixed, and further 1.6g of magnesium oxide was added as a catalyst and mixed, and as a result, the temperature of the reactor became 145°C. Subsequently, this reaction vessel was heated and the reaction was performed, while heating to 260°C at the heating rate of 30°C/hr, and thereafter the reaction continued at 260°C until the acid value became not more than 20 KOHmg/g to obtain the modified rosin ester resin composition (R-4) for use in the lithographic ink varnish of the present invention which contained the modified rosin ester resin, non-reacted linseed oil, soybean oil, and pentaerythritol. As for the obtained modified rosin ester resin composition (R-4) for use in lithographic ink varnish, the acid value, weight average molecular weight, viscosity and solvent solubility (AF solvent 7 solubility) were measured. The results are shown in Table 2.

### Example 5

Into a reaction vessel, 1,000g of gum rosin (acid value 165 KOHmg/g) and 106 g of fumaric acid were placed, and the resultant mixture was heated and stirred at 220°C for 1 hours while releasing nitrogen into the vessel to obtain a reaction mixture which contained the acid modified gum rosin and non-reacted gum rosin, having an acid value of 242 KOHmg/g, and thereafter 157g of linseed oil, 160g of tung oil, and 162g of pentaerythritol were added thereinto and mixed, and further 1.6g of magnesium oxide was added as a catalyst and mixed. And as a result, the temperature of the reactor became 158°C. Subsequently, this reaction vessel was heated and the reaction was performed, while heating to 270°C at the heating rate of 30°C/hr, and thereafter the reaction continued at 270°C until the acid value became not more than 20 KOHmg/g to obtain the modified rosin ester resin composition (R-5) for use in the lithographic ink varnish of the present invention which contained the modified rosin ester resin, non-reacted linseed oil, soybean oil, and pentaerythritol. As to the obtained modified rosin ester resin composition (R-5) for use in the lithographic ink varnish, the acid value, weight average molecular weight, viscosity, and solvent solubility (AF solvent 7 solubility) were measured. Results are shown in Table 2.

### Example 6

Into a reaction vessel, 1,000g of gum rosin (acid value 165 KOHmg/g) and 75.7 g of maleic anhydride were placed, and the resultant mixture was heated and stirred at 220°C for 1 hour while releasing nitrogen into the vessel to obtain a reaction mixture which contained the acid modified gum rosin and non-reacted gum rosin, having an acid value of 235 KOHmg/g, and thereafter 317 g of linseed oil and 152.5 g of pentaerythritol were added thereinto and mixed, and further 1.5g of magnesium oxide was added as a catalyst and mixed. And as a result, the temperature of the reactor became 152°C. Subsequently, this reaction vessel was heated and the reaction was performed, while heating to 270°C at the heating rate of 30°C/hr, and thereafter the reaction continued at 270°C until the acid value became not more than 20 KOHmg/g to obtain the modified rosin ester resin composition (R-6) for use in the lithographic ink varnish of the present invention which contained the modified rosin ester resin, non-reacted linseed oil, and pentaerythritol. As for the obtained modified rosin ester resin composition (R-6) for use in lithographic ink varnish, the acid value, weight average molecular weight, viscosity, and solvent solubility (AF solvent 7 solubility) were measured. The results are shown in Table 2.

### Comparative Example 1

Into a reaction vessel, 1,000g of gum rosin (acid value 165 KOHmg/g) and 106 g of fumaric acid were placed, and the resultant mixture was heated and stirred at 220°C for 1 hour while releasing nitrogen into the vessel to obtain a reaction mixture which contained the acid modified gum rosin and non-reacted gum rosin, having an acid value of 245 KOHmg/g, and thereafter adding 317g of soybean oil and 170g of pentaerythritol were added thereinto and mixed, and further 1.5g of magnesium oxide was added as a catalyst and mixed. And as a result, the temperature of the reactor became 155°C. Subsequently, this reaction vessel was heated and the reaction was performed, while heating to 270°C at the heating-up rate of 30°C/hr, and thereafter the reaction continued at 270°C until the acid value became not more than 25 KOHmg/g to obtain the modified rosin ester resin composition (CR-1) for use in the lithographic ink varnish for comparison. As for the obtained modified rosin ester resin composition (CR-1) for use in the lithographic ink varnish, acid value, weight average molecular weight, viscosity, and solvent solubility (AF solvent 7 solubility) were measured.
The results are shown in Table 3.

### Comparative Example 2

Into a reaction vessel, 1,000g of gum rosin (acid value 165 KOHmg/g) and 106 g of fumaric acid were placed, and the resultant mixture was heated and stirred at 220°C for 1 hour while releasing nitrogen into the vessel to obtain a reaction mixture which contained the acid modified gum rosin and non-reacted gum rosin, having an acid value of 242 KOHmg/g, and thereafter 243g of pentaerythritol was added thereinto and mixed, and further 1.6g of magnesium oxide was added as a catalyst and mixed. And as a result, the temperature of the reactor became 185°C. Subsequently, this reaction vessel was heated and the reaction was performed, while heating to 270°C at the heating rate of 30°C/hr, and thereafter the reaction continued at 270°C until the acid value became not more than 25 KOHmg/g to obtain the modified rosin ester resin composition (CR-2) for use in the lithographic ink varnish for comparison which contained the modified rosin ester resin and non-reacted pentaerythritol. As for the obtained modified rosin ester resin composition (CR-2) for use in the lithographic ink varnish, acid value, weight average molecular weight, viscosity and solvent solubility (AF solvent 7 solubility) were measured. The results are shown in Table 3.

### Comparative Example 3

Into a reaction vessel, 1,000g of gum rosin (acid value 165 KOHmg/g) and 111 g of fumaric acid were placed, and the resultant mixture was heated and stirred at 220°C for 1 hour while releasing nitrogen into the vessel to obtain a reaction mixture which contained the acid modified gum rosin and non-reacted gum rosin, having an acid value of 263 KOHmg/g, and thereafter 194g of 1,8-octanediol and 97g of pentaerythritol were added thereinto and mixed, and further 1.5g of magnesium oxide was added as a catalyst and mixed. And as a result, the temperature of the reactor became 158°C. Subsequently, this reaction vessel was heated and the reaction was performed, while heating to 270°C at the heating rate of 30°C/hr, and thereafter the reaction continued at 270°C until the acid value became not more than 25 KOHmg/g to obtain the modified rosin ester resin composition (CR-3) for use in the lithographic ink varnish for comparison which contained the modified rosin ester resin, non-reacted 1,8-octane diol and pentaerythritol. As for the obtained modified rosin ester resin composition (CR-3) for use in the lithographic ink varnish, the acid value, weight average molecular weight, viscosity, and solvent solubility (AF solvent 7 solubility) were measured. The results are shown in Table 3.

### Comparative example 4

Into a reaction vessel, 1,000g of gum rosin (acid value 165 KOHmg/g) and 132 g of fumaric acid were placed, and the resultant mixture was heated and stirred at 220°C for 1 hour while releasing nitrogen into the vessel to obtain a reaction mixture which contained the acid modified gum rosin and non-reacted gum rosin, having an acid value of 260 KOHmg/g, and thereafter 194g of 1,8-octanediol and 97g of pentaerythritol were added thereinto and mixed, and further 1.5g of magnesium oxide was added as a catalyst and mixed. And as a result, the temperature of the reactor became 176°C. Subsequently, this reaction vessel was heated and the reaction was performed, while heating to 270°C at the heating rate of 30°C/hr, and thereafter the reaction continued at 270°C until the acid value became not more than 25 KOHmg/g to obtain the modified rosin ester resin composition (CR-4) for use in the lithographic ink varnish for comparison which contained the modified rosin ester resin, non-reacted 1,8-octanediol and pentaerythritol. As for the obtained modified rosin ester resin composition (CR-4) for use in lithographic ink varnish, acid value, weight average molecular weight, viscosity, and solvent solubility (AF solvent 7 solubility) were measured. The results are shown in Table 3.

**[Table 1]**

| Item | | Examples | | |
|---|---|---|---|---|
| | | 1 | 2 | 3 |
| Gum rosin (g) | | 1000 | 1000 | 1000 |
| Fumaric acid (g) | | 106 | 106 | 106 |
| Maleic anhydride (g) | | - | - | - |
| Linseed oil (g) | | 317 | 240 | 160 |
| Soybean oil (g) | | - | - | - |
| Tung oil (g) | | - | - | - |
| Glycerin (g) | | - | - | - |
| Pentaerythritol (g) | | 162 | 162 | 162 |
| Magnesium oxide (g) | | 1.5 | 1.5 | 1.5 |
| Modified rosin ester resin composition | Name of modified rosin ester resin composition | R-1 | R-2 | R-3 |
| | Acid value (KOHmg/g) | 18 | 23 | 28 |
| | Weight average molecular weight | 76800 | 181000 | 252000 |
| | Viscosity | R | V | X |
| | Solvent solubility (ml/g) | 3.0 | 2.1 | 1.7 |

**[Table 2]**

| Item | | Examples | | |
|---|---|---|---|---|
| | | 4 | 5 | 6 |
| Gum rosin (g) | | 1000 | 1000 | 1000 |
| Fumaric acid (g) | | 106 | 106 | 106 |
| Maleic anhydride (g) | | - | - | 75.7 |
| Linseed oil (g) | | 222 | 157 | 317 |
| Soybean oil (g) | | 95 | - | - |
| Tung oil (g) | | - | 160 | - |
| Glycerin (g) | | - | - | - |
| Pentaerythritol (g) | | 162 | 162 | 152.5 |
| Magnesium oxide (g) | | 1.6 | 1.6 | 1.5 |
| Modified rosin ester resin composition | Name of modified rosin ester resin composition | R-4 | R-5 | R-6 |
| | Acid value (KOHmg/g) | 18 | 18 | 15 |
| | Weight average molecular weight | 58000 | 80200 | 45000 |
| | Viscosity | R | S | Q |
| | Solvent solubility (ml/g) | 2.3 | 1.9 | 3.5 |

**[Table 3]**

| Item | | Examples | | | |
|---|---|---|---|---|---|
| | | 1 | 2 | 3 | 4 |
| Gum rosin (g) | | 1000 | 1000 | 1000 | 1000 |
| Fumaric acid (g) | | 106 | 106 | - | 132 |
| Maleic anhydride (g) | | - | - | 111 | - |
| Linseed oil (g) | | - | - | - | - |
| Soybean oil (g) | | 317 | - | - | - |
| Tung oil (g) | | - | - | 194 | 194 |
| Glycerin (g) | | - | - | - | - |
| Pentaerythritol (g) | | 162 | 243 | 97 | 97 |
| Magnesium oxide (g) | | 1.5 | 1.6 | 1.5 | 1.5 |
| Modified rosin ester resin composition | Name of modified rosin ester resin composition | CR-1 | CR-2 | CR-3 | CR-4 |
| | Acid value (KOHmg/g) | 18 | 20 | 25 | 25 |
| | Weight average molecular weight | 16700 | 150000 | 24000 | 19700 |
| | Viscosity | D-E | X | G | I |
| | Solvent solubility (ml/g) | 4.9 | 0.9 | >15 | >15 |

### Examples 7 to 12 and Comparative Example 5

A water-separating-cooling pipe, a thermometer, 56 parts by weight of the modified rosin ester resin composition for use in lithographic ink varnish (R-1) to (R-6) or (CR-1), 9 weight pats of linseed oil, 30 weight pats ofAF solvent 5 (petroleum type non-aromatic solvent, produced by Shin-Nihon Sekiyu Co., Ltd.) were placed into a four-necked flask equipped with a stirrer. While heating the resultant mixture and releasing nitrogen gas thereinto, the resultant mixture was kept at 200°C for 30 minutes with stirring, thereby adjusting the viscosity to be within the range of 1,000 to 2,000 dPa · s. And thereafter, the resultant mixture was cooled to 160°C, after adding 1.0 parts by weight of a gelling agent (Chelope-A1 (brand name), produced by HOPE Chemical Co., Ltd.) thereinto, heating it to 200°C, allowing it to sit for 60 minutes to obtain the lithographic ink varnishes (V-1) to (V-6) of the present invention and the lithographic ink varnish (CV-1) for comparison. As for each of these lithographic ink varnishes, viscosity at 25°C according to a B type viscometer was measured, and viscoelasticity measurement (Temperature = 25°C, Test method = Frequency Sweep, measurement style = parallel plate, Strain =20%) was performed using a rheometer (Stress Rheometer (Trade Name), made by Reometrics Co., Ltd.) to obtain Eta * and Tan δ in the case in which the frequency was 1 rad/sec, and in the case in which frequency is 100 rad/sec, repectively. Each result is shown in Tables 4, 5, and 6.

It should be noted that the charging amount of the 56 parts by weight of the modified rosin ester resin compositions for use in lithographic ink varnish (R-1) to (R-6) and (CR-1) used in Examples 7 to 12 and Comparative Example 5 was adjusted, taking the modified vegetable oil amount into consideration, such that the resin content (amount of the resin component obtained by subtracting 11 parts by weight of the vegetable oil component to be used in the production such as linseed oil, soybean oil, etc., from 56 parts by weight of the modified rosin ester resin compositions for use in the lithographic ink varnish (R-1) to (R-2), and (CR-1) obtained in Examples 1 to 6 and Comparative Example 1) will be 45 parts by weight, which is equivalent to the charging amount of 45 parts by weight of the modified rosin ester resin compositions for use in lithographic ink varnish (CR-2) to (CR-4) for comparison, containing no vegetable oil component, used in Comparative Examples 6 to 8 mentioned below. Moreover, the 9 parts by weight of the charging amount of linseed oil was adjusted, taking the 11 g of the vegetable oil components such as linseed oil, soybean oil, etc. into consideration, contained in the above modified rosin ester resin compositions (R-1), (R-2) and (CR-1), such that the resin content of the whole varnish system would be 20 parts by weight, which is equivalent to the charging amount of 20 parts by weight of the vegetable oil component used in Comparative Examples 6 to 8 mentioned below.

### Comparative Examples 6 to 8

In substitution for the modified rosin ester resin composition (R-1) - (R-6) for the lithographic ink varnish of the present invention and (CR-1) 56 parts by weight, are used, Lithographic ink varnishes (CV-2) to (CV-4) for comparison were obtained in the same way as in Examples 6 to 12 and Comparative Example 5, with the exception of using 45 parts by weight of the modified rosin ester resin compositions for use in lithographic ink varnish (CR-2) to (CR-4) for comparison, instead of 56 parts by weight of the modified rosin ester resin compositions for use in lithographic ink varnish (R-1) to (R-6) and (CR-1) of the present invention, and changing the amount of linseed oil to be used into 20 parts by weight. Subsequently, in the same way, viscosity and Eta * and Tan δ in the case in which the frequency was 1 rad/sec, and in the case in which the frequency was 100 rad/sec were obtained, repectively. Each result is shown in Table 6.

**[Table 4]**

| Item | | | Example | | |
|---|---|---|---|---|---|
| | | | 7 | 8 | 9 |
| Name of lithographic ink varnish | | | V-1 | V-2 | V-3 |
| R-1 (parts by weight) | | | 56 | - | - |
| R-2 (parts by weight) | | | - | 56 | - |
| R-3 (parts by weight) | | | - | - | 56 |
| Linseed oil (parts by weight) | | | 9 | 9 | 9 |
| AF solvent 5 (parts by weight) | | | 34.5 | 34.5 | 34.5 |
| Gelling agent Chelope-Al (parts by weight) | | | 0.5 | 0.5 | 0.5 |
| Varnish | Viscosity (dPa·s) | | 2500 | 4100 | 5500 |
| | Frequency 1 rad/sec | Eta*(dPa·s) | 6000 | 6700 | 7400 |
| | | tan δ | 2.7 | 2.3 | 2.1 |
| | Frequency 100 rad/sec | Eta*(dPa·s) | 1800 | 1400 | 1200 |
| | | tan δ | 2.3 | 1.8 | 1.6 |

**[Table 5]**

| Item | | | Example | | |
|---|---|---|---|---|---|
| | | | 10 | 11 | 12 |
| Name of lithographic ink varnish | | | V-4 | V-5 | V-6 |
| R-4 (parts by weight) | | | 56 | - | - |
| R-5 (parts by weight) | | | - | 56 | - |
| R-6 (parts by weight) | | | - | - | 56 |
| Linseed oil (parts by weight) | | | 9 | 9 | 9 |
| AF solvent 5 (parts by weight) | | | 34.5 | 34.5 | 34.5 |
| Gelling agent (Chelope-Al) (parts by weight) | | | 0.5 | 0.5 | 0.5 |
| Varnish | Viscosity (dPa·s) | | 1900 | 2800 | 1800 |
| | Frequency 1 rad/sec | Eta*(dPa·s) | 7000 | 8000 | 5500 |
| | | tan δ | 2.3 | 2.8 | 2.8 |
| | Frequency 100 rad/sec | Eta*(dPa·s) | 1500 | 2100 | 1700 |
| | | tan δ | 2.2 | 2.3 | 2.4 |

**[Table 6]**

| Item | | | Comparative Example | | | |
|---|---|---|---|---|---|---|
| | | | 5 | 6 | 7 | 8 |
| Name of lithographic ink varnish | | | CV-1 | CV-2 | CV-3 | CV-8 |
| CR-1 (parts by weight) | | | 45 | - | - | - |
| CR-2 (parts by weight) | | | - | 45 | - | - |
| CR-3 (parts by weight) | | | - | | 45 | - |
| CR-3(parts by weight) | | | | | | 45 |
| Linseed oil (parts by weight) | | | 9 | 20 | 20 | 20 |
| AF solvent 5 (parts by weight) | | | 34.5 | 34.5 | 34.5 | 34.5 |
| Gelling agent (Chelope-Al) (parts by weight) | | | 0.5 | 0.5 | 0.5 | 0.5 |
| Varnish | Viscosity (dPa·s) | | 450 | >1000 | 350 | 400 |
| | Frequency 1 rad/sec | 750 | 550 | (*1) | 750 | 530 |
| | | 4.0 | 4.4 | (*1) | 4.0 | 4.5 |
| | Frequency 100 rad/sec | 300 | 250 | (*1) | 300 | 200 |
| | | 2.0 | 1.5 | (*1) | 2.0 | 1.6 |

| | | | | | | |
|---|---|---|---|---|---|---|
| (*1) The measurement was impossible because viscosity was too high. | | | | | | |

### Test Examples 1 to 6 and Comparative Test Examples 1 to 4

To each 60 parts by weight of the lithographic ink varnishes (V-1) to (V-6) and (CV-1) to (CV-4) obtained in Examples 7 to 12 and Comparative Examples 5 to 8, as a red pigment, 17 parts by weight of Brilliant Carmine 6B-233 (brand name) (produced by Dainippon Ink & Chemicals, Inc.) was added and kneaded by three-roll mill to disperse the pigment, and thereafter 23 parts by weight (AF solvent 5 in an amount ranging from 5 to 23 parts by weight, and additional lithographic ink varnish in an amount ranging from 0 to 18 parts by weight, as shown in Tables 5 and 6) in a total of AF solvent 5 and an additional lithographic ink varnish, and 1 parts by weight of cobalt naphthenate as a dryer were added thereto and the resultant mixtures were further kneaded to obtain lithographic inks (I-1) to (I-6) and (CI-1) to (CI-4) having tuck value ranging from 9.0 to 9.5/25°C. Characteristics (tuck value, fluidity, drying time, gloss, misting, the maximum emulsification percentage) of thus obtained lithographic inks were measured or evaluated as follows. The results are shown in Tables 7, 8 and 9.

* Tuck value: The tuck value after 60 seconds from the placement of lithographic ink into a digital INK-O-meter [made by TOYO SEIKI Co., Ltd.,] was obtained under the conditions of a roll temperature of 32°C, roll rotation number of 400 rpm, at room temperature of 25°C, in accordance with JISK5701 (2000).

* Flowability: The spread (diameter: mm) of ink after 60 seconds from the placement of the lithographic ink into a parallel plate viscometer [made by TOYO SEIKI Co., Ltd.,] was obtained at room temperature of 25°C, in accordance with JISK5701 (2000).

* Drying time: The time until it became impossible to confirm ink adhesion in accordance with the drying method of CHOYO-KAI'S method of the Ministry of Finance Printing Bureau. Using a CHOYO-KAI'S type drying-testing-machine under the conditions of room temperature of 25°C, and humidity of 60 % RH, the lithographic ink was printed on a parchment paper, a woodfree paper was piled thereon, it was wound onto a drum, a pressing wheel was put on, and the drum was rotated. Then, the time at which the ink became untrodable on the paper was obtained.

* Gloss: 0.15 ml of a lithographic ink was printed onto the coated surface of a one-sided art coated piece of paper [produced by Oji Paper Co., Ltd.] by a rotary ink tester RI-2 [made by AKIRA SEISAKUSYO Co., Ltd.], divided into 2 rolls, and then the printed paper was passed through an oven at 100°C for 10 seconds, and then the resultant paper was allowed to stand for one day. Thereafter, the gloss value of the printed lithographic ink was measured by a glossmeter VG-2000 [made by Nippon Denshoku Kogyo Co., Ltd.] under the conditions of a reflection angle of 60 ° and room temperature 25°C.

* Misting: 1.31 ml of a lithographic ink was placed into a digital inkometer [made by TOYO SEIKI Co., Ltd.], and the roll was rotated at 1200 rpm for 10 minutes under the conditions of room temperature (25°C) and the roll temperature of 42°C, while disposing white papers to the bottom and the front of the roll. After rotating the roll, the flying state of the resultant lithographic ink onto the paper were observed, and they were classified and evaluated, that is, the state that there were no or very little ink flew and no problems for practical use was evaluated as "○"or "A", the state that there was a little ink flew was evaluated as "Δ" or "B", and the state that there were a lot of ink flew was evaluated as " ×" or "F"

* The maximum emulsification percentage: 25 g of a lithographic ink was placed into a Lithotronic emulsification testing machine [made by Novocontrol Co., Ltd. in Germany], and then it was heated up to 40°C, and thereafter distilled water was added at the rate of 4ml/minute, with measuring the agitating torque while agitating at the rotating number of the agitating apparatus of 1200 rpm, and the water content at the time (when ink and water are isolated from each other and the agitating torque started to decrease) the added water which reached at the saturating amount was obtained as the maximum emulsification percentage (% by weight).

**[table 7]**

| Item | | Test Examples | | |
|---|---|---|---|---|
| | | 1 | 2 | 3 |
| Name of lithographic ink | | I-1 | I-2 | I-3 |
| V-1 (parts by weight) | | 60 | - | - |
| V-1 additional (parts by weight) | | 5 | - | - |
| V-2 (parts by weight) | | - | 60 | - |
| V-2 additional (parts by weight) | | - | 3 | - |
| V-3 (parts by weight) | | - | - | 60 |
| V-2 additional (parts by weight) | | - | - | 5 |
| Magenta pigment (parts by weight) | | 17 | 17 | 17 |
| AF solvent 5 (parts by weight) | | 18 | 19 | 17 |
| Dryer (parts by weight) | | 1 | 1 | 1 |
| Ink characteristics | Tuck value | 9.3 | 9.3 | 9.3 |
| | Flowability (mm) | 37.4 | 36.5 | 35.5 |
| | Drying time(hr) | 6 | 6 | 5.5 |
| | Gloss | 76.8 | 74.9 | 72.3 |
| | Misting | ○ | ○ | ○ |
| | The maximum emulsifying percentage (% by weight) | 55 | 72 | 83 |

**[Table 8]**

| Item | | Test Examples | | |
|---|---|---|---|---|
| | | 4 | 5 | 6 |
| Name of lithographic ink | | I-4 | I-5 | I-6 |
| V-4 (parts by weight) | | 60 | - | - |
| V-4 additional (parts by weight) | | 9 | - | - |
| V-5 (parts by weight) | | - | 60 | - |
| V-5 additional (parts by weight) | | - | 3 | - |
| V-6 (parts by weight) | | - | - | 60 |
| V-6 additional (parts by weight) | | - | - | 1 |
| Magenta pigment (parts by weight) | | 17 | 17 | 9 |
| AF solvent 5 (parts by weight) | | 14 | 20 | 29 |
| Dryer (parts by weight) | | 1 | 1 | 1 |
| Ink characteristics | Tuck value | 9.3 | 9.2 | 9.3 |
| | Flowability (mm) | 38.2 | 37.5 | 36.5 |
| | Drying time(hr) | 6 | 5.5 | 7 |
| | Gloss | 80.5 | 76.6 | 75.8 |
| | Misting | ○ | ○ | ○ |
| | The maximum emulsifying percentage (% by weight) | 70 | 64 | 52 |

**[Table 9]**

| Item | | Comparative Test Examples | | | |
|---|---|---|---|---|---|
| | | 1 | 2 | 3 | 4 |
| Name of lithographic ink | | CI-1 | CI-2 | CI-3 | CI-4 |
| CV-1 (parts by weight) | | 60 | - | - | - |
| CV-1 additional (parts by weight) | | 6 | - | - | - |
| CV-2 (parts by weight) | | - | 60 | - | - |
| CV-2 additional (parts by weight) | | - | 6 | - | - |
| CV-3 (parts by weight) | | - | - | 60 | - |
| CV-3 additional (parts by weight) | | - | - | 7 | - |
| CV-4(parts by weight) | | - | - | - | 60 |
| CV-4 additional (parts by weight) | | - | - | - | 5 |
| Magenta pigment (parts by weight) | | 17 | 17 | 17 | 17 |
| AF solvent 5 (parts by weight) | | 17 | 17 | 16 | 18 |
| Dryer (parts by weight) | | 1 | 1 | 1 | 1 |
| Ink characteristics | Tuck value | 9.2 | Miss-transition (*2) | 9.2 | 9.2 |
| | Flowability (mm) | 41.0 | Miss-transition (*2) | 38.4 | 38.2 |
| | Drying time(hr) | 9 | Miss-transition (*2) | 8 | 8 |
| | Gloss | 72.0 | Miss-transition (*2) | 70.8 | 72.7 |
| | Misting | × | Miss-transition (*2) | × | × |
| | The maximum emulsifying percentage (% by weight) | 100 | Miss-transition (*2) | 80 | 76 |

| | | | | | |
|---|---|---|---|---|---|
| (*2) Miss-transition: Ink is in the condition where ink is very hard and flowablity is very poor, that ink cannot spread uniformly over the roll of testing apparatus. | | | | | |

### INDUSTRIAL APPLICABILITY

The present invention is applicable to the production of an eco-friendly modified rosin ester resin composition for use in lithographic ink and lithographic ink varnish, which can be produced as a composition which contains resin having high molecular weight and high viscosity, without using phenols such as alkyl phenol etc., and formaldehydes having problems of deteriorating living environment and working environment in the synthesis process.

## Claims

1. A process for producing a modified rosin ester resin composition for use in lithographic ink varnish, comprising reacting rosin (A), an acid modified rosin (B) which is obtained by denaturating rosin (A) with α,β-unsaturated dicarboxylic acid and/or anhydride thereof (b), an oil modified rosin (C) which is obtained by denaturating rosin (A) with a vegetable oil (c) having an iodine value of 140 or more, and a polyol (D) oftrihydric or more.

2. The process for producing a modified rosin ester resin composition for use in lithographic ink varnish as set forth in claim 1, wherein the rosin (A), the α,β-unsaturated dicarboxylic acid and/or anhydride thereof (b), and the vegetable oil (c) having an iodine value of 140 or more are reacted to form a reaction mixture which contains rosin (A), an acid modified rosin (B), an oil modified rosin (C), and a non-reacted vegetable oil (c) as an optional element, and then the polyol (D) of trihydric or more is reacted with the reaction mixture.

3. The process for producing a modified rosin ester resin composition for use in lithographic ink varnish as set forth in claim 1, wherein the rosin (A) and the α,β-unsaturated dicarboxylic acid and/or anhydride thereof (b) is reacted to form a reaction mixture which contains rosin (A) and an acid modified rosin (B), and then the reaction mixture is reacted with a vegetable oil (c) having an iodine value of 140 or more, and thereafter the polyol (D) of trihydric or more is reacted therewith.

4. The process for producing a modified rosin ester resin composition for use in lithographic ink varnish as set forth in claim 1, wherein the rosin (A) and the α,β-unsaturated dicarboxylic acid and/or anhydride thereof (b) is reacted to obtain a reaction mixture (1) which contains rosin (A) and an acid modified rosin (B), and then the reaction mixture (1) is mixed with the vegetable oil (c) having an iodine value of 140 or more, and the polyol (D) of trihydric or more, and the resultant mixture is reacted at a temperature ranging of not less than 160 °C and not more than 230°C, and thereafter the resultant mixture is further reacted at a temperature ranging from 230 to 270°C.

5. The process for producing a modified rosin ester resin composition for use in lithographic ink varnish as set forth in claim 4, wherein the mixing is to mix 10 to 80 parts by weight of the vegetable oil (c) having an iodine value of 140 or more, 10 to 20 parts by weight of polyol (D) of trihydric or more with 100 parts by weight of the reaction mixture which contains rosin (A) and an acid modified rosin (B).

6. The process for producing a modified rosin ester resin composition for use in lithographic ink varnish as set forth in claim 5, wherein the reaction mixture which contains rosin (A) and an acid modified rosin (B) is a reaction mixture having acid value ranging from 220 to 260 KOHmg/g which is obtained by reacting 5 to 20 parts by weight of the α,β-unsaturated dicarboxylic acid and/or anhydride thereof (b) with 100 parts by weight of rosin (A).

7. The process for producing a modified rosin ester resin composition for use in lithographic ink varnish as set forth in claim 4, wherein the reaction at a temperature of not less than 160°C and not more than 230°C is performed with being heated up at a heating rate ranging 10 to 50°C/hr.

8. The process for producing a modified rosin ester resin composition for use in lithographic ink varnish as set forth in claim 1, wherein the amount to be used of rosin (A) ranges from 0.5 to 6 parts by weight, the amount to be used of the acid modified rosin (B) ranges from 21 to 75 parts by weight, the amount to be used of the oil modified rosin (C) ranges from 21 to 75 parts by weight, and the amount to be used of the polyol (D) of trihydric or more ranges from 4 to 20 parts by weight, to 100 parts by weight of the total of rosin (A), an acid modified rosin (B), and an oil modified rosin (C).

9. The process for producing a modified rosin ester resin composition for use in lithographic ink varnish as set forth in claim 1, wherein the oil modified rosin (C) is an oil modified rosin obtained by denaturating rosin (A) with a vegetable oil having an iodine value ranging from 140 to 200.

10. The process for producing a modified rosin ester resin composition for use in lithographic ink varnish as set forth in claim 9, wherein the acid modified rosin (B) is an acid modified rosin obtained by denaturating rosin (A) with an α,β-unsaturated dicarboxylic acid and/or anhydride thereof having fumaric acid content of not less than 80 % by weight.

11. The process for producing a modified rosin ester resin composition for use in lithographic ink varnish as set forth in claim 10, wherein the polyol (D) of trihydric or more is a polyol of trihydric or tetrahydric.

12. The process for producing a modified rosin ester resin composition for use in lithographic ink varnish as set forth in claim 1, wherein the reaction of rosin (A), the acid modified rosin (B), the oil modified rosin (C), and the polyol (D) of trihydric or more is performed in the absence of phenols and formaldehydes.

13. The process for producing a modified rosin ester resin composition for use in lithographic ink varnish as set forth in claim 12, wherein the reaction is continued until the weight average molecular weight of the modified rosin ester resin obtained by reacting rosin (A), the acid modified rosin (B), the oil modified rosin (C), and the polyol (D) of trihydric or more comes to range from 40,000 to 3,000,000.

14. A process for producing a lithographic ink varnish, comprising dissolving the modified rosin ester resin composition for use in lithographic ink varnish obtained by the process as set forth in claim 1 in a hydrocarbon type solvent (E).

15. A process for producing a lithographic ink varnish, comprising dissolving the modified rosin ester resin composition for use in lithographic ink varnish obtained by the process as set forth in claim 1 in a hydrocarbon type solvent (E), and thereafter reacting a gelling agent (F) therewith.

16. The process for producing a lithographic ink varnish as set forth in claim 15, comprising dissolving the modified rosin ester resin composition for use in lithographic ink varnish obtained by the process as set forth in claim 1 in a hydrocarbon type solvent (E), and thereafter reacting a gelling agent (F) therewith to form a lithographic ink having Eta* ranging from 1,000 to 10,000 dPa·s, and Tan δ ranging from 1 to 7 when the frequency in the measurement of viscosity using a rheometer (measurement temperature 25°C) is 1 rad/sec, and Eta* ranging from 100 to 4,000 dPa·s, and Tan δ ranging from 1 to 5 when the frequency is 100 rad/sec.
